# EUROPEAN PATENT APPLICATION

(11) **EP 3 301 505 A1**
(43) Date of publication of application: **04.04.2018**
(21) Application number: 16191389.2
(22) Date of filing: 29.09.2016
(51) Int. Cl.: G02C 7/02, B29D 11/00

(54) **SPECTACLE LENSES AND METHODS FOR PRODUCING THE SAME FROM A SINGLE SEMI FINISHED LENS**

(71) Applicant: Hoya Lens Thailand Ltd., Pathumthani 12130 (TH)
(72) Inventor: MATSUSHIMA, Masaaki, Tokyo 160-8347 (JP)
(74) Representative: Hoffmann Eitle

(57) **Abstract**

The invention related to a method, program, computer program, system for obtaining multiple lenses from one single blank, and to corresponding lenses. According to the method, steps are foreseen for obtaining lens specification information (S10), and generating (S20), on the basis of the lens specification information, integrated surface data comprising lens surface data and junction surface data. The lens surface data comprises data representing at least one surface for each of said at least two lens units; the junction surface data comprises data representing at least one junction surface joining respective surfaces of the at least two lens units. The integrated surface data represents a physical surface that is to be obtained by machining one single blank.

## Description

### TECHNICAL FIELD

The present invention relates to lenses, and in particular to a method for designing a plurality of lenses, a process for producing the same, lenses obtained by means of such design or process, and a computer for performing such design or assisting in the production process.

### TECHNICAL BACKGROUND

A lens is usually obtained either by a molding process or by machining it from a so called blank. As known in the art, a blank is a unit or physical body made of a material suitable for lenses and obtained for instance by means of a molding process. The lens is obtained from the blank by means of a machine, which removes material from the blank until a lens is obtained having surfaces with desired optical properties. Both surfaces of the lens can be obtained by removing material from the blank, or only one lens surface in case the other lens surface coincides with one of the blank surfaces.

It is usual to obtain one single lens from one single blank by following a process including steps like:
Step A) Receiving prescription data for a wearer(also indicated as RX);
Step B) Generating, on the basis of the prescription data, lens surface data in the form of (typically) a point-by-point file representing a model for the physical lens surface (s) to be obtained from the blank; the step of generating is substantially a step of processing, in which also very complex functions are processed in view of constraints represented by the prescription to obtain the surface(s) matching the prescription data;
Step C) Programming a CNC (Computer Numeric Control) machine on the basis of the point-by-point model data;
Step D) Machining the semi-finished lens. In particular, machining includes running the (correspondingly programmed) CNC machine to physically generate the surface from the semi-finished lens. Subject to machining tolerances, programming errors, etc., the physical surface is as much as possible close to the point-by-point surface previously obtained by processing.
Step E) The machining is followed by other conventional steps, like for instance polishing (i.e. rendering the surface smoother), placing protective layers, etc.

A large number of different ways exist for performing the above, aimed at matching the prescription data or at optimizing different parameters like for instance wearer's preferences or other design parameters.

Conventional methods for obtaining lenses are described for instance in US7,980,920 or in "Freeform lenses", parts 1 to 3, by Paul Bullock, Hoya, and more in particular part 2 retrievable at:
https://s3-eu-west-1.amazonaws.com/rbi-communities/wp-content/uploads/importedimages/freeform-lenses-part-2.pdf

Despite all possible differences, one common point to known prior art methods lies in that one single semi-finished lens (one single blank) is used for producing one single final lens. This concept has been typically considered not only simple, but also appropriate, effective, and necessary for producing lenses, and as such widely followed.

Despite the above common practice, the inventors have recognized a need for improving prior art techniques especially when wanting to obtain a plurality of lenses.

### SUMMARY OF THE INVENTION

It is conceivable to obtain two lenses from a single blank, for instance by generating the surface(s) of each lens and programming the CNC machine to remove material from one single blank in order to obtain the physical surfaces of the two lenses. The two lenses can then be separated from each other. Such solution could be conveniently achieved by using a method as above described, for instance by obtaining data for right and left lens surfaces, programming the CNC machine on the basis of the left and right desired lens surfaces, and producing the final lenses by removing material from the single blank in correspondence of the areas or volumes of the blank from which the two lenses are derived. The inventor has however recognized that such solution is not easy to obtain in practice, or at least not effective and efficient, also when using advanced tooling machines, and surely not viable when wanting to use less advanced tooling machines.

One of the objects of invention is thus to improve existing techniques for obtaining lenses, in particular when wanting to obtain a plurality of lenses preferably from a single lens blank.

Further aspects of the invention are as follows. A1. Method for the design of lens units using a computer, the method comprising steps of:
- obtaining lens specification information (S10);
- generating (S20), on the basis of said lens specification information, integrated surface data comprising lens surface data and junction surface data, wherein
said lens surface data comprises data representing at least one surface for each of said at least two lens units,
said junction surface data comprises data representing at least one junction surface joining respective surfaces of said at least two lens units, and
the integrated surface data represents a physical surface that is to be obtained by machining one single semi-finished lens.
A1.1 Method according to aspect A1, wherein said junction surface comprises a continuous surface.
A1.2 Method according to aspect A1.1, wherein said continuous surface is a surface for which at least a first partial derivative exists in at least some of its points, and wherein preferably said at least first partial derivative is different than zero.
A1.3 Method according to aspect A1.1, wherein said continuous surface is a surface for which at least a second partial derivative exists in at least some of its points, and wherein preferably said at least second partial derivative is different than zero.
A1.4 Method according to any of the preceding aspects, further comprising a step of generating machining programming data corresponding to said integrated surface data, wherein the machining programming data is suitable for controlling a machine to process a single semi-finished lens unit to obtain at least one surface for each of said at least two lens units.
A1.5 Method according to any of the preceding aspects, comprising a step of selecting a semi-finished lens amongst a solid shaped semi finished lens unit, a semi fished lens unit having the inner surface exhibiting given inner properties, and a semi fished lens unit having the outer surface exhibiting given outer properties.
A1.6 Method according to aspect A1.5, wherein the step of selecting comprises selecting on the basis of said lens specification information.
A1.7 Method according to any of the preceding aspects, wherein the step of generating comprises an optimization processing of the data representing at least one surface of each of said at least two lens units on the basis of the semi-finished lens unit, in particular so that the at least two lens units fit within the single semi-finished lens unit.
A1.8 Method according to aspect A1.7, wherein the optimization processing includes at least one amongst rotating and translating model representations of at least one of the lens units over the other and/or over the semi-finished lens unit so that the at least two lens units fit in the semi-finished lens unit.
A1.9 Method according to any of the preceding aspects, wherein the step of generating said lens surface data comprises an optimization processing including an alignment processing of data representing at least one surface of said at least two lens units so that each of said at least one surface is aligned to a respective surface of the semi-finished lens.
A1.10 The method according to any of aspects A1.7 to A1.9, wherein the step of generating comprises generating said junction surface data on the basis of said optimization processing.
A.2 Process for the production of at least two lens units from a single semi-finished lens unit, comprising steps of:
   - obtaining lens specification information (S410);
   - generating (S420), on the basis of said lens specification information, integrated surface data comprising lens surface data and junction surface data, wherein said lens surface data comprises data representing at least one surface for each of said at least two lens units, and said junction surface data comprises data representing at least one junction surface joining the surfaces of said at least two lens units;
   - machining the at least two lenses from a single semi-finished lens unit on the basis of said integrated surface data.
A2.1 Process according to aspect A2, further comprising a step of polishing the at least two lenses obtained by machining.
A2.2 Process according to aspect A2, further comprising a step of separating from the single semi-finished lens unit the at least two lens units obtained by polishing.
A2.3 Computer program for designing lens units, the computer program comprising instructions configured to execute, when the program is executed on a computer, all the steps of any one of aspects A1 to A1.10.
A2.4 Computer program for controlling the production of at least two lens units from a single semi-finished lens unit, the computer program comprising instructions configured to execute, when the program is executed on a computer, all the steps of any one of aspects A2 to A2.2.
A2.5 Lens units obtainable from a method according to any of aspects A1 to A2.3.
A2.6 System for the production of at least two lens units from a single semi-finished lens unit, the system comprising a computing entity suitable for performing a method according to any of aspects A1 to A1.9, and a machine suitable for machining the at least two lenses from a single semi-finished lens unit on the basis of integrated surface data obtained by any of said aspects A1 to A1.9.
A3. Process for the production of a plurality of lens units from a single semi-fished lens unit, the process comprising steps of:
   - obtaining (S1410) lens specification information;
   - selecting (S1420) a first set of lens units comprising a first plurality of lens units from said plurality of lens units;
   - generating (S1430), on the basis of said lens specification information, for said first set of lens units, first set surface data comprising data describing at least one surface of each of said lens units of said first set;
   - obtaining (S1440) lens units corresponding to said at least first set of lens units from said one semi-fished lens unit on the basis of said first subset surface data.
A3.1 Process according to aspect A3, further comprising steps of:
   - selecting a second set of lens units comprising a second plurality of lens units from said plurality of lens units;
   - generating, on the basis of said lens specification information, for said second set of lens units, second set surface data comprising data describing at least one surface of each of said lens units of said second set;
   wherein the first set surface data and the second set surface data are arranged along a longitudinal direction of the semi-finished lens.
A3.2 Process according to any of aspects A3 and A3.1, wherein said first set surface data further comprises data describing a junction surface joining respective surfaces of said lens comprised in said first set of lenses.
A3.3 Process according to aspect A3.1, wherein said second set surface data further comprises data describing a junction surface joining respective surfaces of said lens comprised in said second set of lenses.
A3.4 Process according to any of aspects A3 to A3.3, wherein obtaining comprises machining at least one lens of said first set.
A3.5 Process according to aspect A3.1, wherein obtaining comprises machining all lenses of said first set, and machining all lenses of said second set after the lenses of the first set have been obtained.
A4. Computer program for controlling a computing entity capable of obtaining lens units from a single semi-finished lens, the computer program comprising instructions that, when executed by the computing entity, cause the computing entity to perform the steps of:
   - obtaining lens specification information for said plurality of lens units;
   - obtaining a first set of lens units comprising a first plurality of lens units from said plurality of lens units;
   - generating, on the basis of said lens specification information, for said first set of lens units, first set surface data comprising data describing at least one surface of each of said lens units of said first set;
   - obtaining said at least first set of lens units from said one semi-fished lens unit on the basis of said first subset surface data.
A4.1 Computer program according to aspect A4, further comprising instructions causing the computing entity to perform the steps of:
   - obtaining a second set of lens units comprising a second plurality of lens units from said plurality of lens units;
   - generating, on the basis of said lens specification information, for said second set of lens units, second set surface data comprising data describing at least one surface of each of said lens units of said second set;
   wherein the first set surface data and the second set surface data are arranges along a longitudinal direction of the blank.
A4.2 Computer program according to aspect A4.1, wherein obtaining comprises machining all lenses of said first set, and machining all lenses of said second set after the lenses of the first set have been obtained.
A4.3 Lens units obtainable from a process according to any of aspects A3 to A3.5.
A4.4 System for the production of a plurality of lens units from a single semi-finished lens unit, the system comprising a computing entity suitable for executing a computer program according to any of aspects A4 to A4.2, and a machine suitable for machining the plurality of lenses from a single semi-finished lens unit on the basis of said surface data.

### BRIEF DESCRIPTION OF FIGURES

Figure 1 is a flow chart illustrating a method according to a first embodiment of the invention;
Figure 2 is a flow chart illustrating a method according to an optional variant of the first embodiment;
Figure 3 is a block diagram showing a computer according to an embodiment of the invention;
Figure 4 is a flow chart showing a process according to an embodiment of the invention;
Figure 5 is an illustrative view of an integrated surface;
Figure 6 is an illustrative cross sectional view for an integrated surface;
Figure 7 is an illustrative planar sectional view for an integrated surface;
Figure 8 shows a blank from which two lenses are obtained, as an illustrative example;
Figure 9 lists four cases, each relating to the same curvatures for the two lenses (A, B) but with different parameters leading to possible different integrated surfaces;
Figures 10a and 10b show model surfaces of the integrated surface data corresponding to the cases listed in figure 9 ;
Figures 11a and 11b shows a flow chart according to an example illustrating the functioning of the invention;
Figure 12 shows examples as to how two lenses can be placed within the blank;
Figures 13a and 13b shows examples as to how the lenses and their junction surfaces can be optimized;
Figure 14 is a flow chart of a process according to another embodiment of the present invention;
Figure 15 is a view illustrating how multiple lenses can be obtained from one single semi-finished lens according to the embodiment described with reference to figure 14;

### DETAILED DESCRIPTION

The present invention will now be described in conjunction with specific embodiments by making reference to the drawings. It is however noted that these specific embodiments as well as the illustrative figures serve to provide the skilled person with a better understanding of the invention but are not intended to restrict in any way the scope of the invention which is defined by the independent claims.

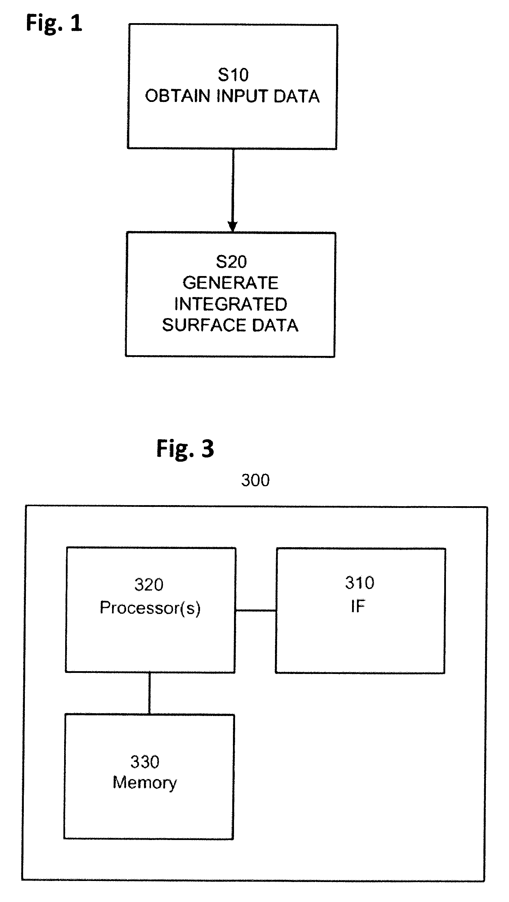

With reference to figure 1, a first embodiment will be described relating to the design of a plurality of lens units. The method may be performed using a computer or a computer entity, as also later illustrated. In step S10, lens specification information are obtained. The lens specification information may comprise information specifying properties to be exhibited by the final lens. For instance, it may comprise prescription data indicating correction properties expected to be provided or exhibited by the final lens, like e.g. any one or a combination of sphere, cyl, axis, add, etc. (when the lens is intended to correct sight or vision). Optionally, in addition to or in alternative (e.g. when the lens is not for correcting sight deficiencies), the specification information may comprise information on the frame shape, wearer style info (e.g. whether they are intended for use during sport, reading, working, etc.), wearer preferences (e.g. extent of vision area(s), type of vision areas, etc.), etc. Also, the prescription data may be specific for one user (also called RX, or data from a receipt), or for a plurality (also large plurality) of users for instance when lenses having the same or similar properties want to be produced in large quantities (e.g. mass production). Also, it is not necessary to specify lens information for all of the plurality of lens units; for instance, in the case of two lens units, it may suffice to specify such information only for one lens unit, and derive the specification information for the other lens unit, e.g. when the two lens units have symmetric or the same properties; in general, the specification information comprises lens specification information for a first lens unit, and derive the lens specification for one (or more) other lens unit from the information of the first lens unit. A lens unit is a physical body used as a lens, for instance for spectacles, magnifiers, binoculars, monocles, etc. The lens units, obtained as herein described, can be lenses to be cut out for a given frame, or can be already the lenses in a shape suitable for being mounted on a given frame. The specification information may be provided to the computing entity in any form, in particular the lens specification may be included in input data provided to the computing entity.

At step S20, the method foresees generating, on the basis of the lens specification information, integrated surface data comprising lens surface data and junction surface data. The lens surface data comprises data representing at least one surface for each of the at least two lens units. The junction surface data comprises data representing at least one junction surface joining respective surfaces of the at least two lens units.

The integrated surface data represents a physical surface that is to be obtained by machining one single semi-finished lens (also SFL, in short). In other words, the integrated surface data is a model of (thus, it represents) the physical surface that is to be generated by means of a tooling machine. Since the integrated surface comprises also the junction surface, it follows that the machine will process the semi-finished lens also in correspondence of such junction surface. In other words, the machine will remove material, as necessary, from the SFL also in correspondence of the junction surface. This is different from another conceivable (see above introduction to the invention) technique according to which each of the lenses is modeled without modeling the surface joining the same, wherein each of the lenses is obtained by removing material from the SFL without any consideration of the junction surface. It is noted that using one single SFL for producing multiple advantages is advantageous in many ways, e.g. stocking of less blanks is needed, material of each blank can be best used, number of different types of blanks can be reduced.

The generating step S20 can be a single step for obtaining lens surface data and junction surface data together, e.g. it may be a single processing operation or routine; or it may comprise multiple steps or processing routines for obtaining lens surface data and junction surface data, which are then combined together into the integrated surface data.

As said, step S20 generates the integrated surface data on the basis of the lens specification information. This should however be understood as that the lens specification information may influence only the generation of the lens surface data, i.e. the junction surface is not necessarily influenced by the lens specification information. Nevertheless, the junction surface data may be generated in a certain way depending on the surface data obtained as a result of the processing, as also later explained in certain examples of optimization. In other words, the lens specification information need not necessarily define constraints that must be met by the junction surface. At the same time, it is possible to impose constraints on the junction surface, like for instance minimum length of such surface (i.e. minimum distance between two lens surfaces), certain degree of curvature, certain gradient of curvature, etc. The constrains for the junction surface may be included in the lens specification information, such that the integrated surface is calculated on such basis.

The data included in the integrated surface data (as well in the lens surface data and/or junction surface data) can be in the form of a set of points describing a surface (e.g. in rectangular or polar coordinates), or parameters of a function describing such surface(s), or a function or combinations of functions describing such surface(s).

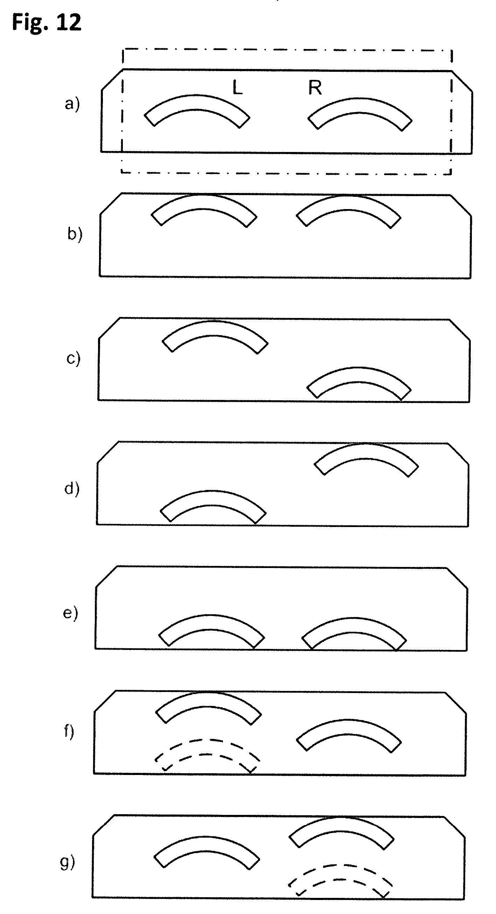

Step S20 of generating the integrated surface data includes generating such data using any free form method, or in general any (also very complex) mathematical modelling suitable for describing lens surfaces and a suitable junction surface joining the two lens surfaces. Also, calculating the surface data may comprise calculating for each of said at least two lens units data representing at least one respective surface on the basis of specification information for the respective lens unit (when noting that the specification may be given for one lens, and derived for the other(s); also, the lens specification may be absent for one lens, if this is not supposed to exhibit any specific property). Importantly, it is not required to generate or model both surfaces of each of the plurality of lenses. In fact, in case one surface of the lens is directly found on the SFL, then that surface does not need to be modeled since it does not need to be machined from the lens: for instance, if one surface of the SFL is provided with the addition power specified by the lens specification, the corresponding surface of the lenses do not need to be modeled, being that coincident with the surface of the SFL (or, in alternative, that model may be made coincident with the known surface, or parts thereof, of the SFL). Evidently, this may apply to any of the inner or outer surfaces of one or more of the plurality of lenses. Reference is made for instance to figure 12, showing in fact that R and L lenses may be differently obtained from the SFL, e.g. both by machining both surfaces from the SFL as in Fig. 12(a), or by machining only one surface of one of the two lenses as in the other parts of the same figure. Figures 12(f) and 12(g) show lenses in dotted lines, to indicate where one of the lenses can be optionally placed instead of the place where they are currently depicted in non-dotted lines. Any solid shape is suitable for the SFL, as also later discussed.

By the way, for inner surface of a lens it is here meant the surface of the lens facing the eyeball; for outer surface of the lens it is here meant the surface of the lens facing the object, and thus the inner and outer surfaces are opposing each other. Also, inner surface and outer surface are herein also interchangeable with backward (eyeball side) surface and, respectively, forward (object side) surface.

A semi-finished lens is an optical body obtained typically by molding, and typically by mass-production in a factory, and is available in a range of sizes and/or parameters. For instance, the SFL may be a block of material suitable for obtaining lenses and having a cylindrical shape or any other solid shape. The SFL may also have one surface exhibiting certain properties, e.g. exhibiting addition power on a given surface, and/or a given spherical power, etc.. The SFL is also called semi-finished lens blank or simply blank.

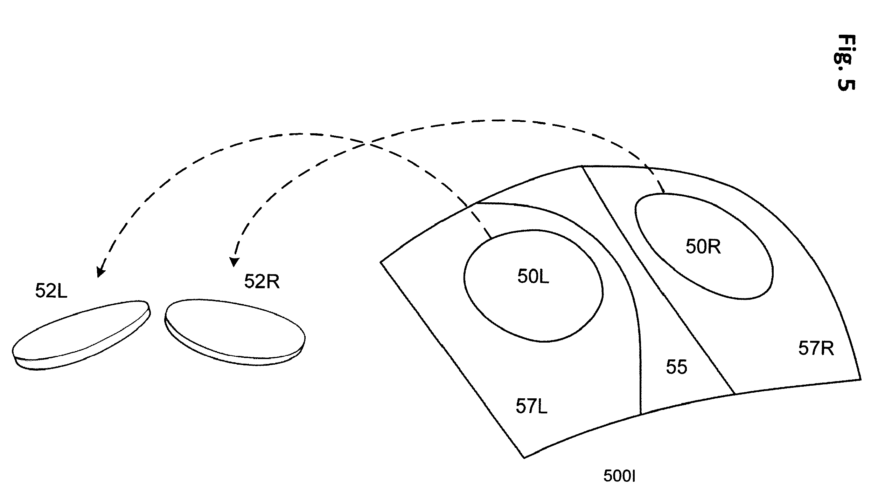

Reference will now be made to figures 5 to 8, showing an example of how the above method can be applied to designing two lens units from a single SFL. Evidently, the example is not limiting, as in fact the method can be applied to any number larger than two of lenses to be obtained from a single SFL.

Figure 5 illustrates a perspective view of an integrated surface 500I, comprising a left-sided surface 57L, a right-sided surface 57R, and a junction surface 55 for joining the left-sided surface 57L with the right-sided surface 57R. The left- and right-sided surfaces (57L, 57R) each comprise surfaces of left lens 50L and, respectively, right lens 50R. The example shows the outer surface; the same applies to the inner surface, having in mind what has been said above on the necessity to generate one or both surfaces of the lenses. The design method generates the integrated surface, for instance by calculating at least one amongst the left lens 50L and right lens 50R on the basis of the lens specification information. Once both lens surfaces 50L and 50R are generated, the junction surface 55 is also generated so as to join areas 50L and 50R. The thereby obtained integrated surface 500I may be stored in a file of points in rectangular or polar coordinates, and used to program a CNC tooling machine in order to physically machine the SFL in order to obtain a physical surface corresponding to the integrated surface 500I. In other words, after machining, a physical surface is obtained being substantially the same (except for tolerances, errors, imperfections, etc.) as the model surface 500I. After machining, the left lens 52L and right lens 52R are obtained (the dotted arrows indicating that lenses 52L and 52R are obtained from the surface model 500I).

One technical advantage of such design lies in that it is easier for the tooling machine to work the SFL. In fact, the machine can operate its tool(s) as if only one single surface (corresponding to 500I) is to be machined/obtained, rather than commanding the tool towards two areas 50L and 50R separated from each other. In the latter case, for instance, the tool would need to work on the right side lens, then move away from the SFL (e.g. detaching the tool from the SFL), and finally work on the left side lens (the order could be different of course). When using the integrated surface 500I, instead, the machine can more freely decide how to machine the SFL, such that its operation is optimized. In other words, it can be said that the integrated surface 500I represents a model for right lens surface, left side surface, and gap or junction surface; this is in contrast to having two separate surfaces separately modelling left and right lenses.

It is noted that the surface 57L can be made coincident with 50L, e.g. by resizing the junction surface to include all (left sided) areas except 50L, or by making surface 50L as close as possible to area 55, or both. Similar considerations apply to the right side.

Once the machine has worked the SFL to obtain a surface corresponding to 500I, the two lenses can be detached from the obtained surface, in order to obtain lenses 52L and 52R. The obtained lenses can then undergo further processing including polishing.

However, it may be advantageous performing other operations including polishing before cutting out lenses 52L and 52R from the machined integrated surface. One advantage lies in fact that it would be sufficient to polish (or perform other operations) on one workpiece only (the physical integrated surface corresponding to 500I) rather than on two workpieces 52L and 52R. This would make such operation quicker, since for instance only one mounting operation instead of two would be required.

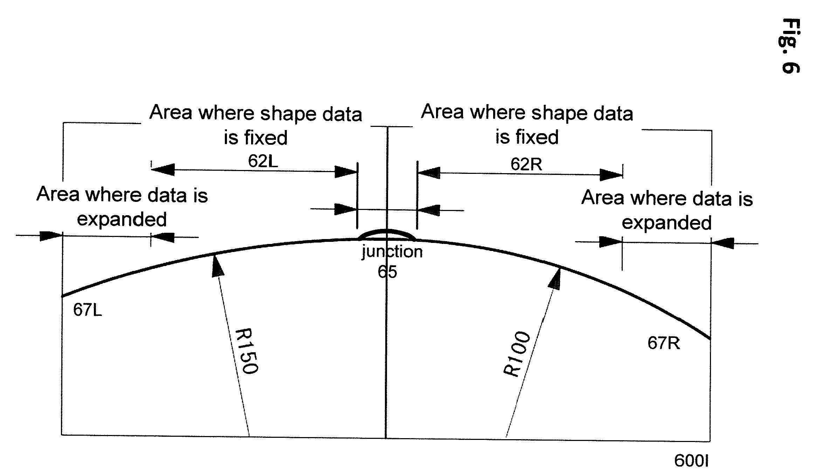

Figure 6 shows, in a cross section view, an example of an integrated surface 600I comprising a left sided surface 67L (comprising or coincident with a left lens surface), a right sided surface 67R (comprising or coincident with a right lens surface), and a junction surface 65. Processing is performed on the basis of lens specification information. In the example, such processing results in a radius of curvature R150 equal to 150mm for the left-hand side surface, and a radius of curvature R100 equal to 100mm for the right-hand side surface. The illustrative radii are calculated in view for instance of prescription data included in the lens specification. Since lens specification information must be respected, the surfaces 67L and 67R can be considered as being now fixed, i.e. data are generated (for instance in the form of points in rectangular or polar coordinates) for the left and right parts as also indicated in the figure (62L, 62R). Once the left and right surfaces are determined, in the example the junction surface 65 can be obtained (or generated, processed) by conveniently joining surfaces 67L and 67R. For instance, any mathematical modelling can be used that changes the radius of curvature of the junction surface between surfaces 67L and 67R. As a consequence, data are obtained that describe also the junction surface, e.g. in the form of points in rectangular or polar coordinates. All data obtained, namely for areas 67L, 67R and 65, can then be combined into integrated data, on the basis of which the machine can obtain a physical surface corresponding to surface 600I of figure 6. As anticipated, though the data are here explained as points, the data may be represented by parameters of function, or a function or combination of functions (the same applying also hereafter, such that no repetition will be made). Figure 6 can be also thought as a cross section of figure 5.

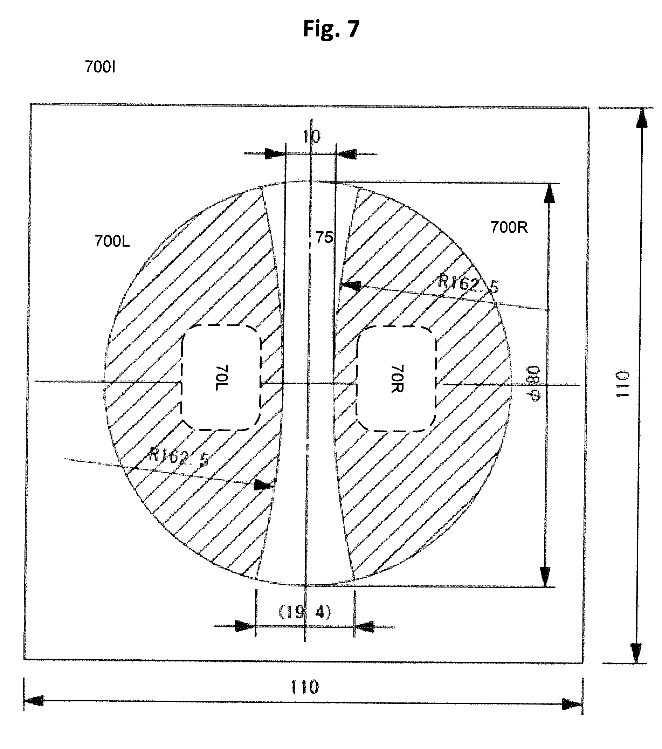

Figure 7 shows, in a planar view, an example of an integrated surface 700I. It is therein recognizable a left-side area 700L including a left lens surface 70L; a right-side area 700R including a right lens surface 70R; and a junction area 75. Figure 7 can also be seen as a planar view of the illustrations given in figures 5 and 6, such that similar considerations apply.

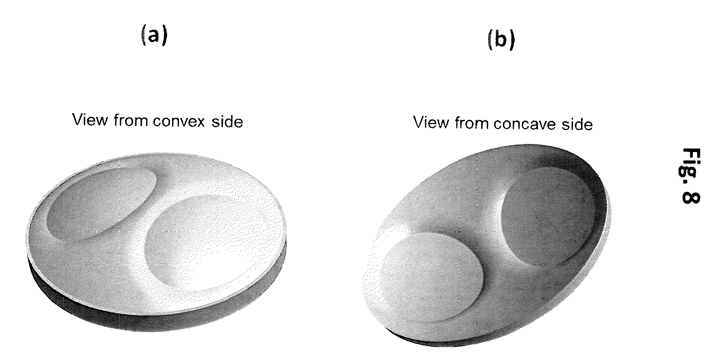

Figure 8 then shows an example wherein both sides of both right and left lenses have been machined by removing material from a single SFL. It is immediate to recognize, however, that is not necessary to machine both sides of both lenses. In fact, in case one of the surfaces of one of the two lenses is coincident with one surface of the SFL, the corresponding machining is not required. Reference is also made to figure 12 and the above illustration.

The junction surface may comprise a continuous surface. Such surface may continuously join the lens surfaces, in the sense that it continuously extends from one lens surface to at least another lens surface. Figures 5 and 6 show such a case, wherein the integrated surface model is in fact continuous. However, it can be foreseen that the junction surface may comprise one or more gaps, i.e. it may be interrupted at certain points or may comprise one or more holes. In such a case, the integrated surface comprises gap(s) or hole(s) in the joining area. Also the presence of gaps/holes in the integrated surface model provides an improved machining and polishing, at least in view of certain types of tooling machines, though the continuous surface extending between lenses is preferable as it allows using a wider range of machines. Also, as long as the surfaces are continuously joined in the model, there are no particular restrictions on the area of the junction surface. As said, the joining surface can be entirely continuous, or only in certain parts, e.g. at the junction with the lens surfaces. However, constraints may be optionally imposed on the junction surface, for instance on the basis of a certain machining process.

Optionally, the continuous surface is a surface for which at least a first partial derivative exists in at least some of its points, and wherein preferably said at least first partial derivative is different than zero. By partial derivative, it is meant a derivative according to one variable, the variable being represented by any one of the coordinates chosen as reference (e.g. x, y, or z for a rectangular coordinate system; similarly for a polar coordinate system). Further preferably, the junction surface can be differentiable in all its points, or in a large part of its points, e.g. in at least 50% of its points. In fact, it has been noted that by requesting the junction surface to be differentiable, the smoothness of the junction surface increases, rendering the machining operations easier and more efficient to carry out. By increasing the number of points on which the derivative is possible, and preferably different than zero, the machining is simplified and made possible with a wider range of cutting and/or polishing machines.

Optionally, the continuous surface is a surface for which at least a second order partial derivative exists in at least some of its points, and wherein preferably said at least second partial derivative is different than zero. Optionally, the second order derivative exists, and is preferably different than zero, in all the points of the junction surface. Optionally, the surface is differentiable along more than one or in all variables/reference axes; or in a large part of its points, e.g. in at least 50% of its points. The more the points and/or axes along which the second derivate exist, and preferably different than zero, the more convenient is to use and control existing machines to produce multiple lenses from one blank. In fact, by having a second order derivative, it has been found that a very wide range of machining tolls (virtually all those presently used) can easily process the SFL, and a very wide range of polishing machines (virtually all those presently used) can work on the SFL to easily produce and finish a plurality of finished lenses.

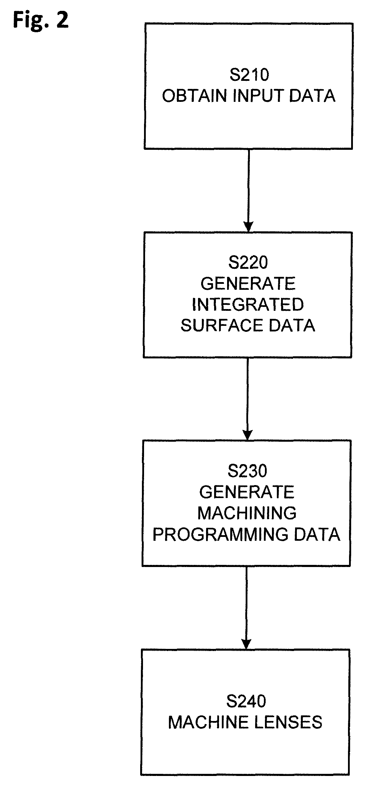

Figure 2 illustrates optional details of the method according to the present embodiment. Steps S210 and S220 are substantially corresponding to steps S10 and, respectively, S20 above illustrated. Optionally, it is provided step S230 of generating machining programming data corresponding to the integrated surface data, wherein the machining programming data is suitable for controlling a machine to process a single semi-finished lens unit to obtain at least one surface for each of said at least two lens units. In other words, the integrated surface data describe a model of the integrated surface to be processed; such data may be translated into programming data suitable for being read and understood by a tooling machine; the tooling machine can then be operated or controlled to process a SFL in order to physically obtain the integrated lens surface and thus the lens units. The tooling machine includes any machine for working a SFL (working including removing material in any way) and/or polishing. In one example, the tooling machine can be the integrated surface data, e.g. when the machine is capable of directly reading such data and control to working tool correspondingly. In another example, the programming data is a file including commands capable of driving the machine to work the SFL in order to obtain the surface corresponding to the integrated surface data.

In the optional step S400, the SFL is machined in order to produce a physical surface corresponding to the integrated surface data. The production step is independent from the design step(s). In fact, it is conceivable that the design is made first to produce design data including the integrated surface data. Such data can be sent to another party, which may independently produce such lenses. In an example, the design can be made by an optic design lab, and the production by an optic production lab. Both of them may be within the same facility, or remote to each other.

The method of the present embodiment and its variant may optionally comprise a step (not illustrated in the figures) of selecting a semi-finished lens amongst a solid shaped semi fished lens unit, a semi fished lens unit having the inner surface exhibiting given inner properties, and a semi fished lens unit having the outer surface exhibiting given outer properties. More in general, the SFL can be optionally selected on the basis of the lens specification information. In fact, depending on the specification, leading e.g. to certain curvatures, a bigger or smaller SFL may be selected, or depending on the surface of the lens an SFL may be selected showing the required properties. Alternatively or in addition, the SFL may be selected depending on certain requirements of the machines to be used.

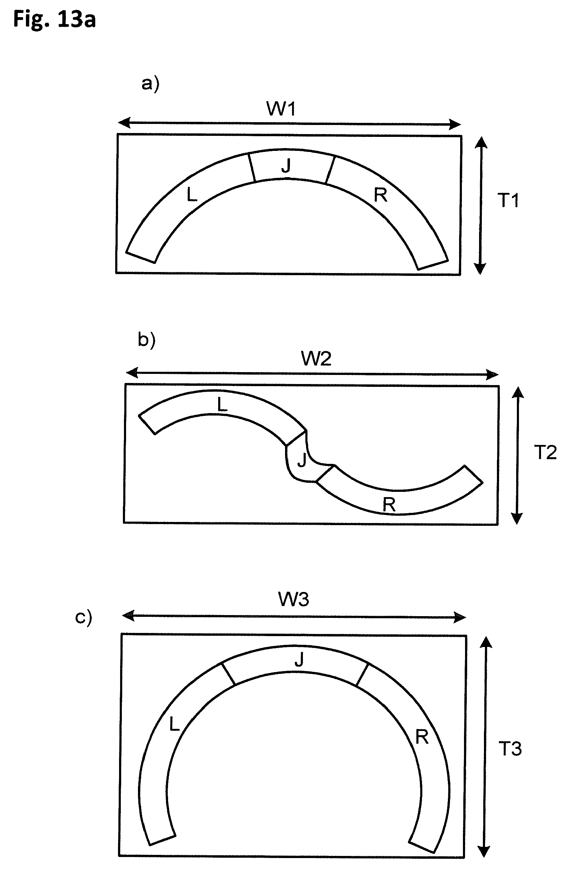

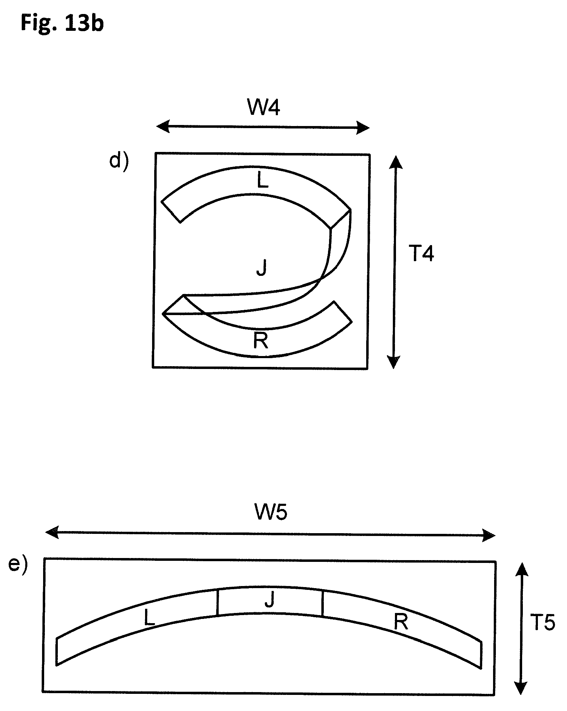

Optionally, the step of generating the lens surface data as above illustrated may comprise an optimization processing of the data representing at least one surface of each of said at least two lens units on the basis of the semi-finished lens unit, in particular (i.e. optionally) so that the at least two lens units fit within the single semi-finished lens unit. As exemplified in figure 13, the optimization process may include rotating and/or translating one lens surface over the other, for instance in order to optimize the usage of the SFL volume, or to choose a smaller SFL thus saving on material or on machining time. Rotating and/or translating may for instance be achieved by applying a geometric transformation to a given set of data (representing an original model for the lenses) so that the transformed data represent a model of the surfaces translated and/or rotated in space compared to the original model. For instance, two lenses may get close to each other or further from each other depending on how large the blank is; also, if the blank is sufficiently thick, one lens may be hypothetically at least partly "overlapping" with another lens in one direction, wherein overlapping refers to the fact that the lenses are placed along one direction of the SFL, see e.g. figure 13(d) showing that the L and R lenses are placed in the T4 direction (e.g. vertical direction of the SFL) and joint together by surface J.

Optionally, in fact, the above described optimization processing includes at least one amongst rotating and translating the model representations of at least one of the lens units over the other and/or over the semi-finished lens unit so that the at least two lens units fit in the semi-finished lens unit. For instance, in figure 13(a) the two lenses have been rotated relative to each other in order to fit in the SFL length W1 and/or thickness T1. In figure 13(b), the two lenses have been differently rotated to fit inside the SFL length W2 and/or thickness T2. In figure 13(c), the two lenses have been relatively placed so as to fit within the SFL thickness T3 and/or length W3. In figure 13(d), the lenses have been placed relative to each other so as to fill within the thickness T4 and/or length W4 of the SFL.

Optionally, the above described step of generating the lens surface data comprises an optimization processing including an alignment processing of data representing at least one surface of said at least two lens units so that each of said at least one surface is aligned to a respective surface of the semi-finished lens. The alignment may be explained as that a plane representative of the lens is parallel to a plane representative of the SFL. The plane representative of the lens may be a plan orthogonal to the lens in the z direction, and passing along a representative point of the lens in the z direction; the representative point can be the middle point in the z direction of the lens. The representative plane of the SFL can be a plane passing through center line of the SFL, a plane coincident with an outer plane surface of the SFL, or tangent to an outer surface of the SFL, etc.

Optionally, the above described step of generating may comprise generating the junction surface data on the basis of the optimization processing. It can be said that once the two surfaces of the two lenses have been placed, then the joining surface can be calculated. In this example, in fact, first the lens surfaces are calculated (in the form of surface data) in view of the optimization, and then the junction surface is calculated to join the surfaces as above described. In case certain properties are wished for the junction surface, e.g. a certain order of derivatives (see above), the calculation may comprise a series of iterations, i.e. (re)calculating the lens surface data and the junction surface data a plurality of times until all requirements are met. The method can also foresee a (re) selection of the SFL, in combination with the optimization and with the optimization iterations, so as to maximize usage of the SFL volume, or having sufficient distance between lens surfaces, etc.

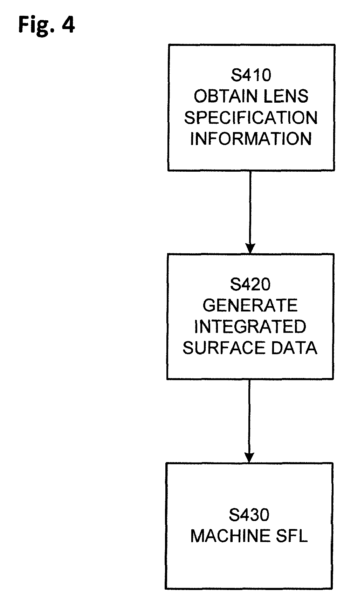

With reference to figure 4, a second embodiment will be described relating to a process for the production of at least two lens units from a single semi-finished lens unit. In step S410, lens specification information are obtained. In step S420, integrated surface data is generated on the basis of said lens specification information. The integrated surface data comprises lens surface data and junction surface data. The lens surface data comprises data representing at least one surface for each of said at least two lens units; the junction surface data comprises data representing at least one junction surface joining the surfaces of said at least two lens units. Steps S410 and S420 substantially correspond to steps S10 and, respectively, S20 (or to step S210 and, respectively, S220), such that the same considerations apply here.

In step S430, the at least two lenses are machined from a single semi-finished lens unit on the basis of the integrated surface data generated in step S420. Any type of machining can be used. For instance, non-rotation type machining can be used wherein the SFL (representing the workpiece for the machine) is not rotated, and a relative movement between tool and SFL ensures removing the material (e.g. the tool is moved along the SFL in order to remove material therefrom; the tool may or may not be rotating, and the trajectory may be of any type). Also, as a further example, also rotation type machining can be used. For instance the SFL (workpiece) is turned, while the working tool WT operates moves to remove material (following e.g. any trajectory). In this example, the tool may or may not turn, depending on the used machining. The type of machines used can be a 3-axis, 4-axis, 5-axis (or any axis) CNC machine, preferably with synchronized axis. Machining includes milling, lathing, etc. Machining the SFL includes also finishing the SFL, for instance polishing the SFL by any known polishing machine.

Thanks to the integrated surface, a very wide range of existing machines can be used to machine the SFL in order to easily obtain the plurality of lenses. For instance, a 3-axis machine can be used, which otherwise without the integrated surface would not be able to accurately machine the SFL. Furthermore, even if a 5-axis could be considered suitable for producing the plurality of lenses without the integrated surface, with the latter it would be able to more efficiently produce the same. Significantly, the use of integrated surface allows the use of virtually all existing polishing machines, which could otherwise not be suitable to polish two lenses obtained from an SFL when having for instance a non-machined gap between them. Importantly, as previously noted, the higher order derivatives on the joining surface significantly facilitates the operations especially of the polishing machines. One advantage of polishing the two lenses together, i.e. in the state of the entire surface corresponding to the integrated surface data, is that it is not necessary to block and execute a polishing operation for each lens; this can be done for the entire surface in one blocking and polishing operation (by blocking, it is meant the operation wherein a workpiece to be polished is blocked by a jig tool suitable for holding the workpiece while the same undergoes polishing).

It is also noted that step S430 is not limited to a working process by removal of material, but also includes processes based on addition of material like 3D printing.

The machining step S430 may be based on programming data, in turn based on the integrated surface data, or coincident with the integrated surface data, see also what has been mentioned above.

As anticipated, the step production method of this embodiment may comprise a step of polishing the at least two lenses obtained by machining. In particular, the step of polishing may be part of the step of machining in one example, or may be separated in another example.

Optionally, the method of the present embodiment comprises a step of separating from the single semi-finished lens unit the at least two lens units obtained by polishing. Preferably, this is done after polishing the lenses when they are still hold together by the joining surface.

According to a third embodiment, it is provided a computer program for designing lens units, the computer program comprising instructions suitable to execute, when the program is executed on a computer, any of the steps described in correspondence of the first embodiment and/or its variants.

Figure 3 shows an exemplary computer suitable for executing such a program. More in detail, the illustrated arrangement may include an interface unit 310 for communicating with one or more other arrangement, for instance over a network, and a processor (or multiple processors) 320 for executing instructions. Moreover, the arrangement comprises a memory 330 (or multiple memories, of any suitable kind) for storing the instructions and/or the data related to the instructions. The instructions can be represented by program code module(s). The memory 330 may include a Read Only Memory (ROM), e.g., a flash ROM, a Random Access Memory (RAM), e.g., a Dynamic RAM (DRAM) or Static RAM (SRAM), a mass storage, e.g., a hard disk or solid state disk, or the like. In one example, the processor, the memory and the interface are general hardware components, with instructions causing the arrangement to function according to the above method or according to the above component entity. In another example, the arrangements comprises one or more of customized processor, memory, and interface, which in combination with specific instructions cause the arrangement to function according to the above method(s) or according to the above component entity. The computer can in fact be implemented as a computer entity wherein its components are not necessarily localized, but distributed over a network.

A fourth embodiment provides a computer program for controlling the production of at least two lens units from a single semi-finished lens unit, the computer program comprising instructions configured to execute, when the program is executed on a computer, any of the steps of the second embodiment and its variants above described. For the computer, the same considerations made above apply here.

According to a fifth embodiment, lens units are provided that are obtained or obtainable from a single semi-finished lens by a design method according to the above embodiments (and variants) or above process(es) and variants. In fact, it is noted that multiple lenses obtained from a single SFL according to the herein described methods and processes result in high accuracy and higher degree of polishing (and thus transparency) since the machines can more easily and efficiently work, thus leading to an improved plurality of lenses obtained from a single SFL.

According to a sixth embodiment, it is provided a system for the production of at least two lens units from a single semi-finished lens unit, the system comprising a computing entity suitable for performing any of the above method(s) or process(es) and corresponding variants, and a machine suitable for machining the at least two lenses from a single semi-finished lens unit on the basis of integrated surface data as above described. The computer entity comprised in such system can one as described in above third and/or fourth embodiments.

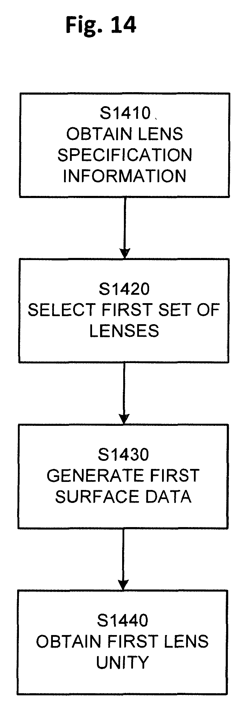

A seventh embodiment will now be illustrated with reference to the flow chart of figure 14, illustrating a process for the production of a plurality of lens units from a single semi-fished lens unit. In the following, only the differences over the previous embodiments will be described. Thus, for the same terms or concepts, reference is made to the above, being equally applicable here unless otherwise stated.

In step S1410, lens specification information are obtained.

In step S1420, a first set of lens units is selected, the first set comprising a first plurality of lens units from the plurality of lens units. Thus, the plurality of lens units according to this embodiment is three or more, and the first set comprises at least two lens units.

In step S1430, first set surface data is generated (S1430) on the basis of the lens specification information, for the first set of lens units. The first set surface data comprises data describing at least one surface of each of the lens units of the first set. In other words, starting from the lens specification information, a model for at least one surface for each of the lenses of the first set is calculated. The result of the modelling is represented by the data, the data being in any of the forms previously illustrated. The surface data thus represents the surface that is to be obtained by machining from a single SFL.

In step S1440, at least the first set of lens units is obtained from one single SFL on the basis of the first subset surface data. To be more exact, lens units are physically obtained, the obtained lens units corresponding to the models of the first set of lens units. The step S1440 of obtaining comprises any machining step, including any finishing step like polishing, see also above discussions.

Optionally, the process may include a step (not illustrated) of selecting a second set of lens units comprising a second plurality of lens units from the plurality of lens units. Then, in an optional additional step, a second set surface data is generated on the basis of the lens specification information, for the second set of lens units. The second set surface data comprises data describing at least one surface of each of the lens units of the second set. The first set surface data and the second set surface data are preferably arranged along a longitudinal direction of the semi-finished lens (more in general, they are arranged along one axis of the SFL).

The (first, second, etc.) subset surface data represents a physical surface that is to be obtained by machining one single semi-finished lens. When more subset surface data relating to different sets are combined, the resulting data also represents a physical surface that is to be obtained by machining one single semi-finished lens. Also, the subset surface data may include a junction surface; in such case, also the junction surface will be physically obtained, as also described in the above embodiments.

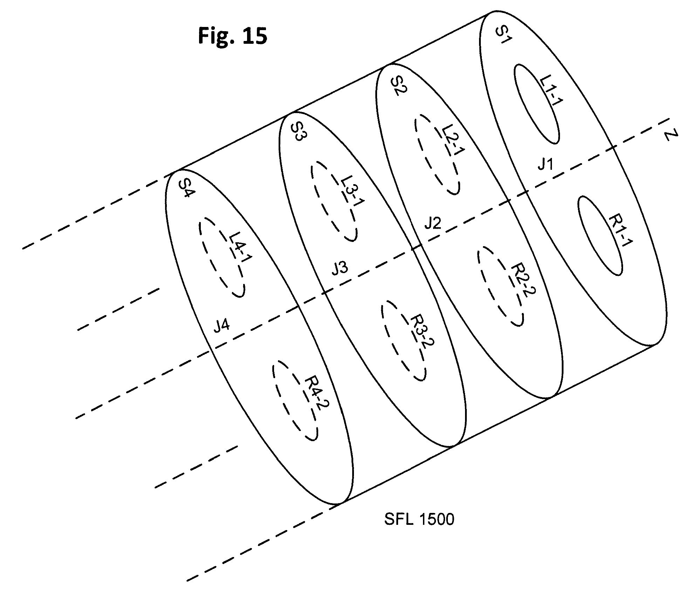

Figure 15 provides an example according to the present embodiment. Namely, a first set of lenses S1 comprises lenses L1-1 and R1-1, a second set of lenses S2 including lenses L2-1 and R2-2, and similarly a third set of lenses S3 etc. Being the figure only illustrative, the lenses are depicted without a thickness, though it is evidently only an approximation as a way of illustration. L and R stand in the example for right and left; however, any combination of left and right lenses may obtained from the SFL, including the case wherein only L or only R lenses are obtained. Each lens may have specific properties as defined by the lens specification information, each of them may have exactly the same properties (e.g. in case of mass production), or any possible combination of different and same lenses. Also, each set is shown to comprise two lenses; however, any of the sets may include more than two lenses, and each set may comprise a different number of lenses, also in different sizes. The sets S1...S4 can also be thought as different layers S1...S4, each layer including a plurality of lenses Li,j, Ri,j. For example, processing can start first with layer S1, i.e. with obtaining the lenses of set S1 on the basis of the data for the integrated surface of the lenses included in set/layer S1 (i.e. integrated surface data of the set S1); the process can then proceed with obtaining the lenses of layer S2, and so on with following layers. Thus, in figure, S1...S4 indicate the sets or layers for illustration purposes only.

As mentioned, the first subset data may model only one of the two surfaces of each of the lens. With reference to figure 15, in fact, when the first set is the one to be machined from the top of the SFL, it may be the case wherein the upper surfaces of the first set are coincident with the upper surface of the SFL. In such case, no machining is required, see also similar considerations in above embodiments.

Optionally, the first set surface data further comprises data describing a junction surface joining respective surfaces of said lens comprised in said first set of lenses. Though not shown in figure 15, such a junction surface (in an area J1 between lenses L1-1 and R1-1 of the set S1) may be as describe in the above embodiments. As such, integrated surface data could be obtained for the set S1 of lenses, and similarly for any other set of lenses.

Optionally, the second set surface data further comprises data describing a junction surface joining respective surfaces of said lens comprised in said second set of lenses. In particular, two or more sets of lenses may each comprise a joining surface. Integrated surface data may be generated for each set, or integrated surface data may comprise data corresponding to two or more sets.

According to the present embodiment, obtaining may comprise machining all lenses of the first set (e.g. S1), and machining all lenses of the second set (e.g. S2) after the lenses of the first set have been obtained.

Also, for obtaining any machining is intended, including by removal of material or addition of material. Also, machining comprises finishing, like for instance polishing as a way to give transparency to the previously processed material.

According to an eight embodiment, it is provided a computer program for controlling a computing entity capable of obtaining lens units, the computer program comprising instructions that, when executed by the computing entity, cause the computing entity to perform a steps of obtaining lens specification information for said plurality of lens units. The instructions further cause obtaining a first set of lens units comprising a first plurality of lens units from the plurality of lens units, and generating, on the basis of the lens specification information, for said first set of lens units, first set surface data comprising data describing at least one surface of each of the lens units of the first set. Furthermore, the instructions cause obtaining the at least first set of lens units from said one semi-fished lens unit on the basis of said first subset surface data. The instructions causing the obtaining include controlling a tooling machine in order to obtain the lenses.

Optionally, the computer program comprises instructions causing the computing entity to perform the steps of obtaining a second set of lens units comprising a second plurality of lens units from the plurality of lens units, and generating, on the basis of the lens specification information, for the second set of lens units, second set surface data comprising data describing at least one surface of each of the lens units of said second set. The first set surface data and the second set surface data are arranged along a longitudinal direction of the blank, e.g. along axis z depicted in figure 15. Evidently, the sets of lenses can be arranged in a different direction/axis depending on the shape of the SFL, which can in fact be conveniently selected also as described with reference to the above embodiments.

Optionally, the computer program comprises instructions for obtaining comprise machining all lenses of the first set, and machining all lenses of the second set after the lenses of the first set have been obtained.

According to a ninth embodiment, lens units are provided that are obtained or obtainable from a single semi-finished lens by a design method according to the above seventh and eight embodiments (and variants) or above process(es) and variants.

According to a further embodiment, a system is provided for the production of a plurality of lens units from a single semi-finished lens unit, the system comprising a computing entity suitable for executing a computer program according to the eight embodiment (and its variants), and a machine suitable for machining the plurality of lenses from a single semi-finished lens unit on the basis of surface data as described above (e.g. of the first and/or any other set of lenses; with or without respective junction surfaces; any variants thereof).

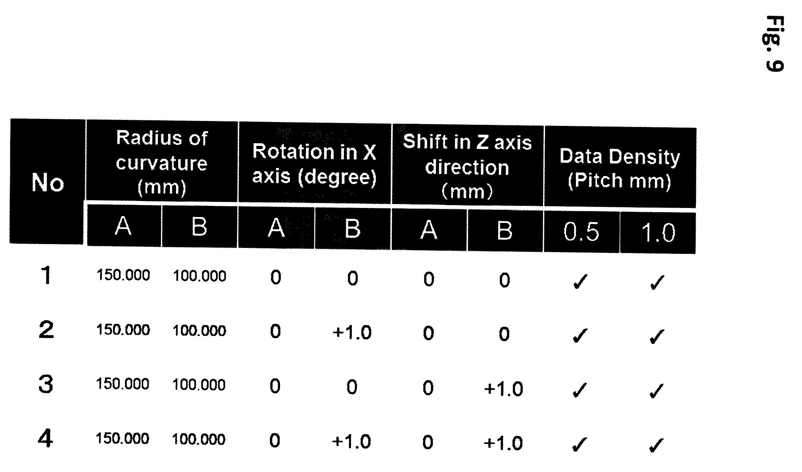

Examples will now be described for facilitating the functioning of the invention and its embodiments. For instance, figure 9 relates to a case wherein one lens (e.g. the left lens, A) is required to have a radius of curvature of 150mm, and another lens (e.g. the right lens, B) a radius of 100mm. Each surface (A or B) can be generated with an X rotation and/or with a Z axis shift. Also, each combined surface can be generated with a smaller (0.5mm) or larger (1.0mm) data pitch.

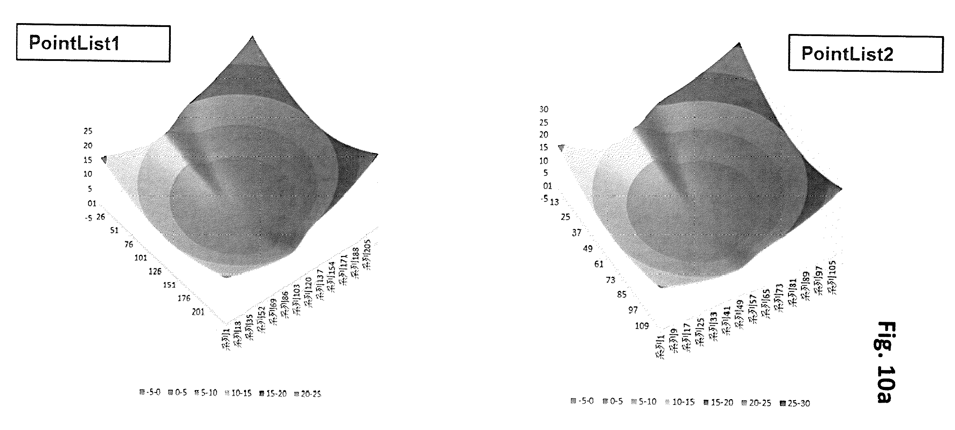

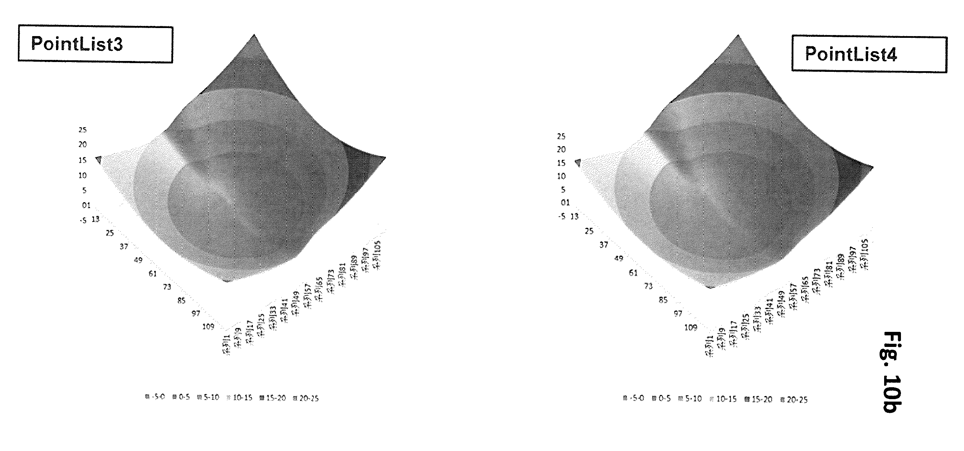

Figure 10 shows the calculated integrated surfaces with a pitch of 1.0mm. In particular, "PointList1", "PointList2", "PointList3", and "PointList4" illustrate the calculated surfaces for cases 1, 2, 3, and respectively 4 as listed in the table of figure 9 (see the first column "No." for case number).

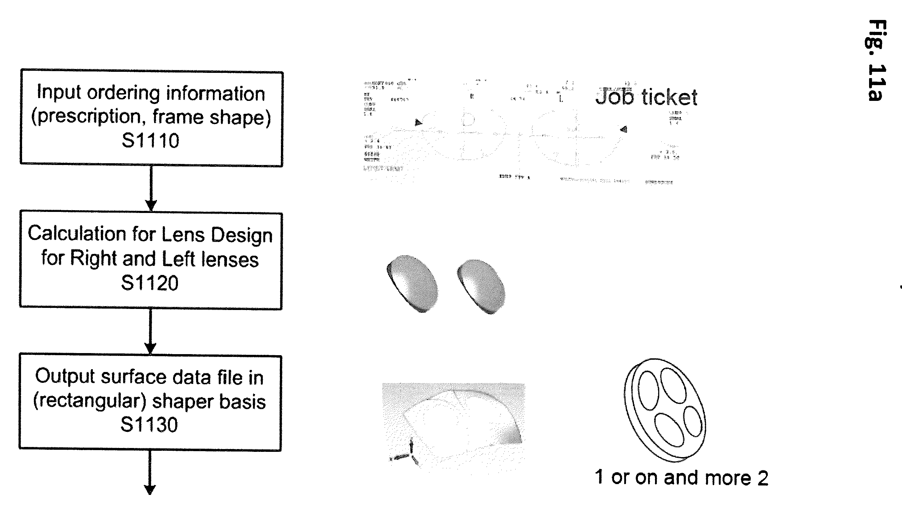

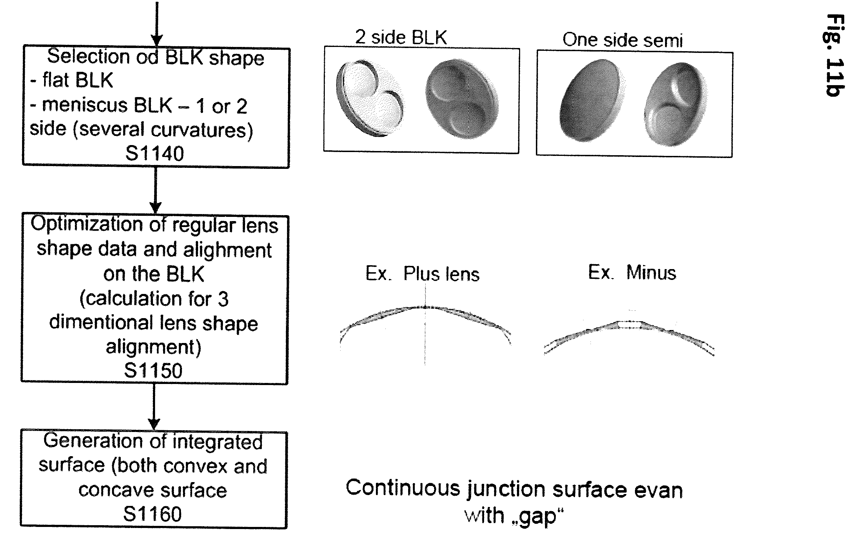

Moreover, figure 11 shows an example for obtaining two lenses for one wearer starting from a job ticket (RX) prepared for that wearer. At S1110, input ordering information are given, comprising lens specification information. In the example, the lens specification information includes the prescription data. At step S1120, the lens design is calculated for the right and left lenses. In other words, based on prescription data, the surfaces of the right and left lenses are calculated in order to match the prescription. Next to step S1120, the two surfaces are illustrated as obtained from such calculation.

In step S1130, an output surface data file is obtained, for instance in a rectangular coordinates and in a "rectangular shape". The output surface data file may thus comprise the integrated surface data above described. Next to step S1130, there are provided an example for an integrated surface with two lenses, and an example for four lenses with corresponding junction surfaces.

In step S1140, a SFL (or blank, in the figure also BLK) is selected. For instance, a flat blank is selected; as an alternative, a meniscus like blank may be selected, for instance having one or both curved surfaces having respectively different curvatures. Next to step S1140, it is provided an illustration of two lenses obtained by machining both opposite surfaces of the blank, and (see right sided picture) a case wherein only one side of the blank is machined. In fact, in the latter illustration, one side of the lenses coincides with the outer side of the blank, such that it is not necessary to remove material therefrom in order to complete the lenses.

In step S1150, an optimization process may be carried out, for instance to optimize the regular lens shape data; and/or to optimize the alignment of lenses relative to the blank. The alignment process may be a calculation for the 3-dimensional lens shape in order to achieve a specific alignment within the blank. The pictures next to block S1150 show for instance the case where plus lenses are optimized in the sense that they are aligned to the convex surface of the blank; the right picture shows the case wherein minus lenses are aligned to the concave surface of the blank.

In step S1160, the integrated surface may be generated. Preferably, the integrated surface comprises a continuous junction surface, i.e. a model for a continuous gap between the lens surfaces. Also the junction surface is thus a surface to be machined. In the example of step S1160, the integrated surface is generated after the optimization processing, though this is not strictly necessary as above described.

The data thereby obtained can be given to a CNC machine, or translated into a programming file suitable for a certain CNC machine. As a consequence, the machine can process the blank in order to produce a physical surface corresponding to the calculated model. Once the material has been removed from the blank, the obtained physical integrated surface can be easily polished. With a smooth junction (e.g. differentiable) several types of polishing machines can be used. In particular, also a 3-axis polishing machine can be conveniently used. When the junction surface is a second order differentiable surface (in at least a part of its points), then polishing can be very accurately and efficiently executed also by means of an unsophisticated polishing machine.

The right and left lenses can be separated from each other once polishing in completed (though they can be separated after the material has been removed, and before polishing - in such case the advantage is still given in that a wide range of material removing machines can be efficiently used).

It is noted that the lens surface data can be seen as data referring to surfaces that need to exhibit optical properties. The junction surface is a surface that does not necessarily need to exhibit optical properties. In fact, it is mainly calculated so as to give a certain degree of continuity and preferably differentiability to the area joining the optical surfaces.

In case of a continuous junction surfaces, it is possible to perform mirror processing also with a wider range of (material removing) machines. Without a continuous junction surface, mirror processing is difficult even with 5-axis machines (the difficulty being higher with larger areas of discontinuity within the junction surface) or not at all possible with less sophisticated machines. Moreover, the degree of continuity and differentiability advantageously render polishing possible and effective with a very wide range of machines, virtually those presently known.

It will be apparent to those skilled in the art that various modifications and variations can be made in the entities, methods, systems, computer programs and signals (carrying instructions for executing the program) of the invention as well as in the construction of this invention without departing from the scope or spirit of the invention. The invention has been described in relation to particular embodiments and examples which are intended in all aspects to be illustrative rather than restrictive. Those skilled in the art will appreciate that many different combinations of hardware, software and firmware will be suitable for practicing the present invention, which scope and spirit is defined by the following claims.

## Claims

1. Method for the design of lens units using a computer, the method comprising steps of:
- obtaining lens specification information (S10);
- generating (S20), on the basis of said lens specification information, integrated surface data comprising lens surface data and junction surface data, wherein
said lens surface data comprises data representing at least one surface for each of said at least two lens units,
said junction surface data comprises data representing at least one junction surface joining respective surfaces of said at least two lens units, and
the integrated surface data represents a physical surface that is to be obtained by machining one single semi-finished lens.

2. Method according to claim 1, wherein said junction surface comprises a continuous surface.

3. Method according to claim 2, wherein said continuous surface is a surface for which at least a first partial derivative exists in at least some of its points, and wherein preferably said at least first partial derivative is different than zero.

4. Method according to claim 2, wherein said continuous surface is a surface for which at least a second partial derivative exists in at least some of its points, and wherein preferably said at least second partial derivative is different than zero.

5. Method according to any of the preceding claims, further comprising a step of generating machining programming data corresponding to said integrated surface data, wherein the machining programming data is suitable for controlling a machine to process a single semi-finished lens unit to obtain at least one surface for each of said at least two lens units.

6. Method according to any of the preceding claims, comprising a step of selecting a semi-finished lens amongst a solid shaped semi fished lens unit, a semi fished lens unit having the inner surface exhibiting given inner properties, and a semi fished lens unit having the outer surface exhibiting given outer properties.

7. Method according to claim 6, wherein the step of selecting comprises selecting on the basis of said lens specification information.

8. Method according to any of the preceding claims, wherein the step of generating comprises an optimization processing of the data representing at least one surface of each of said at least two lens units on the basis of the semi-finished lens unit, in particular so that the at least two lens units fit within the single semi-finished lens unit.

9. Method according to claim 8, wherein the optimization processing includes at least one amongst rotating and translating model representations of at least one of the lens units over the other and/or over the semi-finished lens unit so that the at least two lens units fit in the semi-finished lens unit.

10. Method according to any of the preceding claims, wherein the step of generating said lens surface data comprises an optimization processing including an alignment processing of data representing at least one surface of said at least two lens units so that each of said at least one surface is aligned to a respective surface of the semi-finished lens.

11. The method according to any of claim 8 to 10, wherein the step of generating comprises generating said junction surface data on the basis of said optimization processing.

12. Process for the production of at least two lens units from a single semi-finished lens unit, comprising steps of:
- obtaining lens specification information (S410);
- generating (S420), on the basis of said lens specification information, integrated surface data comprising lens surface data and junction surface data, wherein said lens surface data comprises data representing at least one surface for each of said at least two lens units, and said junction surface data comprises data representing at least one junction surface joining the surfaces of said at least two lens units;
- machining the at least two lenses from a single semi-finished lens unit on the basis of said integrated surface data.

13. Process according to claim 12, further comprising a step of polishing the at least two lenses obtained by machining.

14. Process according to claim 12, further comprising a step of separating from the single semi-finished lens unit the at least two lens units obtained by polishing.

15. Computer program for designing lens units, the computer program comprising instructions configured to execute, when the program is executed on a computer, all the steps of any one of method 1 to 11.

16. Computer program for controlling the production of at least two lens units from a single semi-finished lens unit, the computer program comprising instructions configured to execute, when the program is executed on a computer, all the steps of any one of method 12 to 14.

17. Lens units obtainable from a method according to any of claims 1 to 15.

18. System for the production of at least two lens units from a single semi-finished lens unit, the system comprising a computing entity suitable for performing a method according to any of claims 1 to 10, and a machine suitable for machining the at least two lenses from a single semi-finished lens unit on the basis of integrated surface data obtained by any of said claims 1 to 10.

19. Process for the production of a plurality of lens units from a single semi-fished lens unit, the process comprising steps of:
- obtaining (S1410) lens specification information;
- selecting (S1420) a first set of lens units comprising a first plurality of lens units from said plurality of lens units;
- generating (S1430), on the basis of said lens specification information, for said first set of lens units, first set surface data comprising data describing at least one surface of each of said lens units of said first set;
- obtaining (S1440) lens units corresponding to said at least first set of lens units from said one semi-fished lens unit on the basis of said first subset surface data.

20. Process according to claim 19, further comprising steps of:
- selecting a second set of lens units comprising a second plurality of lens units from said plurality of lens units;
- generating, on the basis of said lens specification information, for said second set of lens units, second set surface data comprising data describing at least one surface of each of said lens units of said second set;
wherein the first set surface data and the second set surface data are arranged along a longitudinal direction of the semi-finished lens.

21. Process according to any of claims 19 and 20, wherein said first set surface data further comprises data describing a junction surface joining respective surfaces of said lens comprised in said first set of lenses.

22. Process according to claim 20, wherein said second set surface data further comprises data describing a junction surface joining respective surfaces of said lens comprised in said second set of lenses.

23. Process according to any of claims 19 to 22, wherein obtaining comprises machining at least one lens of said first set.

24. Process according to claim 20, wherein obtaining comprises machining all lenses of said first set, and machining all lenses of said second set after the lenses of the first set have been obtained.

25. Computer program for controlling a computing entity capable of obtaining lens units from a single semi-finished lens, the computer program comprising instructions that, when executed by the computing entity, cause the computing entity to perform the steps of:
- obtaining lens specification information for said plurality of lens units;
- obtaining a first set of lens units comprising a first plurality of lens units from said plurality of lens units;
- generating, on the basis of said lens specification information, for said first set of lens units, first set surface data comprising data describing at least one surface of each of said lens units of said first set;
- obtaining said at least first set of lens units from said one semi-fished lens unit on the basis of said first subset surface data.

26. Computer program according to claim 25, further comprising instructions causing the computing entity to perform the steps of:
- obtaining a second set of lens units comprising a second plurality of lens units from said plurality of lens units;
- generating, on the basis of said lens specification information, for said second set of lens units, second set surface data comprising data describing at least one surface of each of said lens units of said second set;
wherein the first set surface data and the second set surface data are arranges along a longitudinal direction of the blank.

27. Computer program according to claim 26, wherein obtaining comprises machining all lenses of said first set, and machining all lenses of said second set after the lenses of the first set have been obtained.

28. Lens units obtainable from a process according to any of claims 19 to 24.

29. System for the production of a plurality of lens units from a single semi-finished lens unit, the system comprising a computing entity suitable for executing a computer program according to any of claims 25 to 27, and a machine suitable for machining the plurality of lenses from a single semi-finished lens unit on the basis of said surface data.
